# EUROPEAN PATENT SPECIFICATION

(11) **EP 4 111 739 B1**
(45) Date of publication and mention of the grant of the patent: **22.10.2025**
(21) Application number: 21715166.1
(22) Date of filing: 22.03.2021
(51) Int. Cl.: H04W 36/00, G06N 3/088, H04W 36/32, H04W 24/04, G06N 3/045

(54) **NETWORK DEVICE AND METHOD FOR TRAINING OF MOBILE STATION MOVEMENT PREDICTION**
NETZWERKVORRICHTUNG UND VERFAHREN ZUM TRAINIEREN DER BEWEGUNGSVORHERSAGE EINER MOBILSTATION
DISPOSITIF DE RÉSEAU ET PROCÉDÉ DE FORMATION DE PRÉDICTION DE MOUVEMENT DE STATION MOBILE

(43) Date of publication of application: 04.01.2023
(73) Proprietor: HUAWEI TECHNOLOGIES CO., LTD., Shenzhen, Guangdong 518129 (CN)
(72) Inventor: KROLIKOWSKI, Jonatan, 80992 Munich (DE); ICOBOAIEA, Ovidiu, Constantin, 80992 Munich (DE)
(74) Representative: Roth, Sebastian
(86) International application number: PCT/EP2021/057178
(87) International publication number: WO 2022/199782

(56) References cited:
- EP-A1- 3 876 600
- WO-A1-2020/214168
- US-A1- 2013 107 728
- US-A1- 2019 116 539
- HUANG LINYU ET AL: "A Survey on Next-Cell Prediction in Cellular Networks: Schemes and Applications", IEEE ACCESS, IEEE, USA, vol. 8, 4 November 2020 (2020-11-04), pages 201468 - 201485, XP011820699, DOI: 10.1109/ACCESS.2020.3036070
- HU HAN ET AL: "Mining Mobile Intelligence for Wireless Systems: A Deep Neural Network Approach", IEEE COMPUTATIONAL INTELLIGENCE MAGAZINE, IEEE, US, vol. 15, no. 1, 10 January 2020 (2020-01-10), pages 24 - 31, XP011764693, ISSN: 1556-603X, [retrieved on 20200110], DOI: 10.1109/MCI.2019.2954641

## Description

### TECHNICAL FIELD

The present disclosure relates to the field of computer networks, machine learning (ML), and artificial intelligence (AI). More specifically, a network device and a corresponding method are provided, which facilitate ML-based prediction of mobile station movement.

Mobile station movement prediction is in particular trained based on natural language processing (NLP) capabilities.

### BACKGROUND

In a conventional wireless local area network (WLAN), each mobile station (STA) is associated to an access point (AP) at a time. For an effective association, values of a downlink (DL) and an uplink (UL) received signal strength indicator (RSSI) need to be sufficient. Both RSSI values depend on the distance between STA and AP (and the resulting path loss) as well as shadowing or multi-path. STA movement may degrade RSSI and reduce quality of service (QoS).

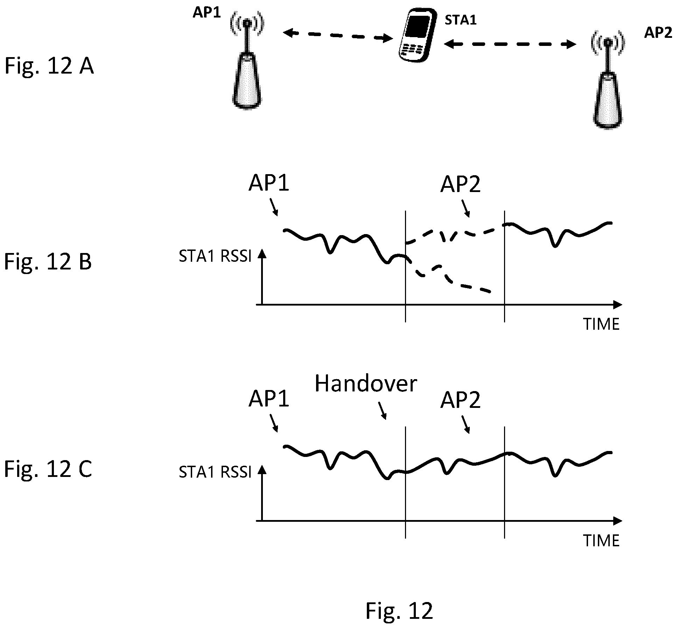

Traditionally, the association between STA and AP is performed by the STA without support from the network. As soon as the DL RSSI is below a STA-specific threshold, the STA performs a channel scan to find the most suitable AP to re-associate (i.e., roam) to (see e.g. FIG.12 A and FIG. 12 B). STA channel scans usually use the same radio interface that is used for transmission/reception. Thus, too frequent scanning degrades STA QoS, additionally to increasing energy costs. On the one hand, the RSSI threshold needs to be sufficiently low to avoid unnecessary scans as well as too frequent handovers (ping-ponging) that may cause service disruptions. On the other hand, if the threshold is too low, the STA may suffer from low RSSI that induces bad QoS, instead of performing a handoff. A fixed threshold cannot solve this tradeoff adequately for every relevant situation.

As an improvement, channel scans may be performed by the APs to gather channel information and guide the STA to handover (HO) to the next AP, e.g. making use of IEEE 802.11r, k and v. Since such AP scans do increase interference in the network (e.g., radio interfaces may be used for other purposes), it is important to determine scan moments that allow for an optimal HO (see Fig. 12 C). These are the moments in which a STA moves away from its current AP.

US 2013/107728 A1 discloses a user behavior model and a statistical transition map to assist advanced WLAN applications.

WO 2020/214168 A1 relates to beam prediction for wireless networks.

HUANG LINYU ET AL, "A Survey on Next-Cell Prediction in Cellular Networks: Schemes and Applications", IEEE ACCESS, IEEE, USA, vol. 8, XP011820699, relates to next-cell prediction in cellular networks, prediction schemes, and applications.

US 2019/116539 A1 relates to proactive roaming handshakes based on mobility graphs.

However, the conventional network devices lack for a solution to effectively predict movement of mobile stations and thus to determine optimal HO times.

### SUMMARY

In view of the above-mentioned problem, an objective of embodiments of the present disclosure is to improve training of predicting movement of mobile stations and thus to improve training of determining optimal HO times. This or other objectives may be achieved by embodiments of the present disclosure as described in the enclosed independent claims. Advantageous implementations of embodiments of the present disclosure are further defined in the dependent claims. The invention is set out in the appended set of claims.

A first aspect of the present disclosure provides a network device for training of mobile station movement prediction, wherein the network device comprises a neural network, and wherein the network device is configured to receive a sequence of access point, AP, identifiers; and in an unsupervised learning phase, generate a high dimensional AP vector for each AP identifier in the sequence, using a natural language processing, NLP, technique, and, in a supervised learning phase, train the neural network based on the high dimensional AP vector.

This ensures that the neural network is effectively trained for optimal movement prediction based on the NLP technique. Thereby, the neural network is enabled to determine a moment when a STA moves away from its current AP and in which a channel scan should be triggered to support guiding the STA towards a new suitable AP. This also avoids signal degradation and improves STA QoS, as unnecessary channel scans can be avoided. In particular, signaling can be reduced if the ideal HO moment can be predicted and more extensive measurement is triggered closer to the HO moment.

Generating the high dimensional AP vector in the unsupervised learning phase is in particular useful as there is no need to relabel or retrain the neural network on new access point names. Moreover, the network device can be easily applied in different networks or different countries (using different AP names).

In particular, training the neural network comprises re-training the neural network.

In particular, the sequence of AP identifiers comprises at least one AP identifier. This can e.g. be the one to which a mobile station currently is connected. In particular, the sequence of AP identifiers comprises at least one of: historical information; a past AP trajectory of a mobile station; information which APs a mobile station went through before reaching a current AP.

In particular, mobile station movement occurs in a wireless network. In particular, the wireless network is a wireless local area network or a mobile communication network, such as 3G, 4G, 5G or the like.

In particular, mobile station movement is movement of a mobile device in a wireless local area network, or in a mobile communication network (e.g. movement of a terminal, a user equipment, or the like).

In particular, the network device is not limited to a single entity performing the above described function. In particular, the network device may be of a distributed fashion. That is, the generating of the high dimensional AP vector for each AP identifier and the training of the neural network based on said high dimensional AP vectors may be performed by separate entities.

In an implementation form of the first aspect, the sequence of AP identifiers comprises a sequence of access points, APs, to which a mobile station was connected.

This ensures that the AP history of a mobile station can be accurately considered for training the neural network.

In a further implementation form of the first aspect, the neural network is pre-trained based on a labeled sequence of signal strength indicator measurements.

This is beneficial as the network device can be put into operation without extensive training (as this was done already during said pre-training).

In a further implementation form of the first aspect, the network device is further configured to obtain a sequence of signal strength identifiers, and in the supervised learning phase of the neural network, learn to predict labels of the obtained sequence of signal strength indicators by training the neural network based on known labels of the obtained sequence of signal strength indicators.

In particular, the input for the neural network in the supervised learning phase comprises the known labels of the obtained sequence of signal strength indicators and the high dimensional AP vectors.

In a further implementation form of the first aspect, the network device is further configured to, in the supervised learning phase of the neural network, build the known labels based on handoff events or handover events of mobile stations.

This ensures that real HO events can be used as labels during training, which further increases movement prediction accuracy.

In particular, the handoff events or the handover events correspond to moments in time where the mobile station disconnected from an AP. This can e.g. be observed in the sequence of AP identifiers that a mobile station follows (that is, in monitored network traffic): each time a new identifier is observed in the sequence of AP identifiers, a handoff event has happened.

In particular, a possibility to build such labels is to assume that all signal strength indicator samples shortly preceding the handoff moments, correspond to a movement state.

In a further implementation form of the first aspect, at least one high dimensional AP vector is pre-stored in the network device, or wherein the network device is configured to receive at least one high dimensional AP vector.

This ensures that the neural network can be trained based on an AP vector, even if the sequence of AP identifiers has not been received, yet.

In particular, if the high dimensional AP vector is pre-stored in the network device, the high dimensional AP vector is read from the network device, to obtain a high dimensional AP vector.

In a further implementation form of the first aspect, the NLP technique comprises a word embedding technique.

This ensures that the advantages of word embedding can be exploited to make the high dimensional AP vector more effective for training the neural network.

In particular, the word embedding technique takes sentences in a given language as an input and builds a vector for each word in the language. Similarly, a sentence in the present case is a sequence of AP identifiers (words) and the result of the embedding is one high dimensional vector for each AP identifier.

In a further implementation form of the first aspect, the word embedding technique comprises word2vec.

This ensures that the advantages of word2vec can be exploited to make the high dimensional AP vector more effective for training the neural network.

In a further implementation form of the first aspect, the network device is further configured to, in an inference phase, invoke the neural network to determine mobile station movement information based on signal strength information and one or more AP identifiers.

This ensures that the network device also can predict mobile station movement, e.g. when it is used as a controller in a wireless network.

In particular, the one or more AP identifiers are identifiers of an AP to which a mobile station is presently connected, or an AP to which it was connected in the past. In particular, the one or more AP identifiers may comprise a historical trajectory of at least two AP identifiers. In particular, the signal strength information indicates a strength of a signal connecting the mobile station and the AP.

In a further implementation form of the first aspect, the mobile station movement information comprises a handoff indicator and/or a network scan indicator.

This ensures that the network device can precisely indicate when to handoff or when to perform a network scan.

In particular, the mobile station movement information can be any movement status such as "station is moving", "station is steady", "station is leaving the network entirely", and the like.

In a further implementation form of the first aspect, the network device is further configured to instruct a mobile station to perform a handoff procedure based on the handoff indicator, and/or a network scan based on the network scan indicator.

This ensures that the network device also can control the mobile station based on the handoff indicator and/or the network scan indicator.

In particular, the network scan is useful to probe the quality of the signal strength indicator between the mobile station and other surrounding potential APs to which the station could handover next. This allows to steer the mobile station to the best next AP.

In a further implementation form of the first aspect, the handoff indicator indicates a point in time of a mobile station disconnection from a wireless network, and/or wherein the network scan indicator indicates a point in time for performing a network scan by selected set of APs. This ensures that a handoff or network scan point in time can be precisely indicated.

A second aspect of the present disclosure provides a method for training mobile station movement prediction, wherein the method comprises the steps of receiving, by a network device, a sequence of access point, AP, identifiers; and in an unsupervised learning phase, generating, by the network device, a high dimensional AP vector for each AP identifier in the sequence, using a natural language processing, NLP, technique, and, in a supervised learning phase, training, by the network device, a neural network of the network device based on the high dimensional AP vector.

In an implementation form of the second aspect, the sequence of AP identifiers comprises a sequence of access points, APs, to which a mobile station was connected.

In a further implementation form of the second aspect, the neural network is pre-trained based on a labeled sequence of signal strength indicator measurements.

In a further implementation form of the second aspect, the method further comprises obtaining, by the network device, a sequence of signal strength identifiers, and in the supervised learning phase of the neural network, learning, by the network device, to predict labels of the obtained sequence of signal strength indicators by training the neural network based on known labels of the obtained sequence of signal strength indicators.

In a further implementation form of the second aspect, the method further comprises, in the supervised learning phase of the neural network, building, by the network device, the known labels based on handoff events or handover events of mobile stations.

In a further implementation form of the second aspect, at least one high dimensional AP vector is pre-stored in the network device, or the method further comprises receiving, by the network device, at least one high dimensional AP vector.

In a further implementation form of the second aspect, the NLP technique comprises a word embedding technique.

In a further implementation form of the second aspect, the word embedding technique comprises word2vec.

In a further implementation form of the second aspect, the method further comprises, in an inference phase, invoking, by the network device, the neural network to determine mobile station movement information based on signal strength information and one or more AP identifiers.

In a further implementation form of the second aspect, the mobile station movement information comprises a handoff indicator and/or a network scan indicator.

In a further implementation form of the first aspect, the method further comprises instructing, by the network device, a mobile station to perform a handoff procedure based on the handoff indicator, and/or a network scan based on the network scan indicator.

In a further implementation form of the second aspect, the handoff indicator indicates a point in time of a mobile station disconnection from a wireless network, and/or wherein the network scan indicator indicates a point in time for performing a network scan by selected set of APs.

The second aspect and its implementation forms include the same advantages as the first aspect and its respective implementation forms.

A third aspect of the present disclosure provides a computer program product comprising instructions which, when the program is executed by a computer, cause the computer to carry out the steps of the method of the second aspects or any of its implementation forms.

The third aspect and its implementation forms include the same advantages as the second aspect and its respective implementation forms.

A fourth aspect of the present disclosure provides a non-transitory computer-readable storage medium comprising instructions which, when executed by a computer, cause the computer to carry out the steps of the method of the second aspect or any of its implementation forms.

The fourth aspect and its implementation forms include the same advantages as the second aspect and its respective implementation forms.

It has to be noted that all devices, elements, units and means described in the present application could be implemented in the software or hardware elements or any kind of combination thereof. All steps which are performed by the various entities described in the present application as well as the functionalities described to be performed by the various entities are intended to mean that the respective entity is adapted to or configured to perform the respective steps and functionalities. Even if, in the following description of specific embodiments, a specific functionality or step to be performed by external entities is not reflected in the description of a specific detailed element of that entity which performs that specific step or functionality, it should be clear for a skilled person that these methods and functionalities can be implemented in respective software or hardware elements, or any kind of combination thereof.

### BRIEF DESCRIPTION OF DRAWINGS

The above-described aspects and implementation forms of the present disclosure will be explained in the following description of specific embodiments in relation to the enclosed drawings, in which
- FIG. 1: shows a schematic view of a network device according to an embodiment of the present disclosure;
- FIG. 2: shows a schematic view of a network device according to an embodiment of the present disclosure in more detail;
- FIG. 3: shows a schematic view of training a neural network according to the present disclosure;
- FIG. 4: shows another schematic view of training a neural network according to the present disclosure;
- FIG. 5: shows a schematic view of a handoff scenario according to the present disclosure;
- FIG. 6: shows a schematic view of an operating scenario according to the present disclosure;
- FIG. 7: shows a schematic view of another operating scenario according to the present disclosure;
- FIG. 8: shows a schematic view of performance metrics according to the present disclosure;
- FIG. 9: shows a schematic view of performance metrics according to the present disclosure;
- FIG. 10: shows a schematic view of performance metrics according to the present disclosure;
- FIG. 11: shows a schematic view of a method according to an embodiment of the present disclosure;
- FIG. 12: shows a schematic view of a conventional handoff situation.

### DETAILED DESCRIPTION OF EMBODIMENTS

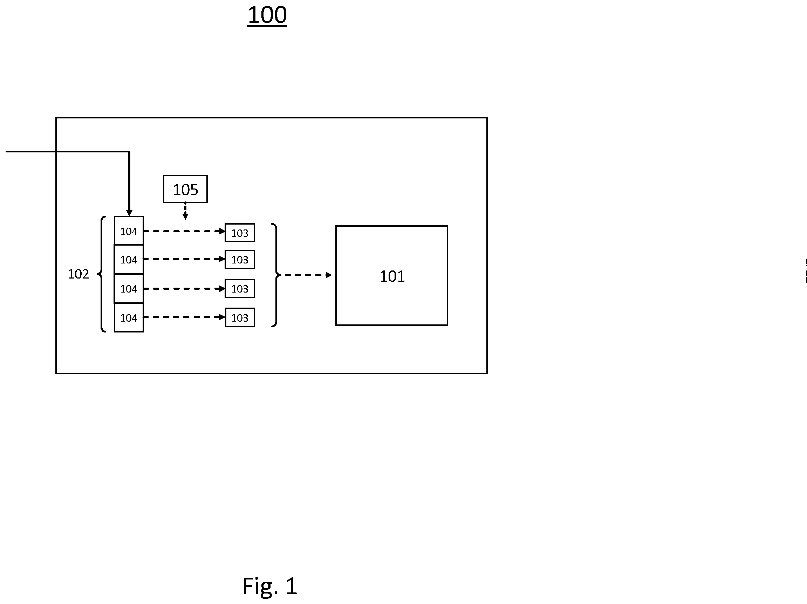

FIG.1 shows a schematic view of a network device 100 according to an embodiment of the present disclosure. The network device 100 is for training of mobile station movement prediction. To this end, the network device 100 comprises a neural network 101.

The network device 100 is configured to receive a sequence of AP identifiers 102. Based on the sequence of AP identifiers 102, the network device 100 can identify a past trajectory of a mobile station, which was associated to the APs 104 in the sequence of AP identifiers 102.

That is, the sequence of AP identifiers 102 optionally comprises a sequence of access points, APs, to which a mobile station was connected.

The network device 100 is further configured to, in an unsupervised learning phase, generate a high dimensional AP vector 103 for each AP identifier 104 in the sequence 102, using a natural language processing, NLP, technique 105, and, in a supervised learning phase, train the neural network 101 based on the high dimensional AP vector 103.

In other words, the network device 100 uses the sequence of AP identifiers 102 that it observes for a mobile station and applies machine learning to a high dimensional AP vector obtained based on the sequence, to determine an ideal HO moment for the future. This HO prediction is improved by the NLP technique to encode relevant per AP information in the neural network 101. Thereby, necessary signaling between e.g. an AP and a mobile station can be reduced when determining an ideal HO moment.

To allow for prediction of mobile station movement, the network device 100 encodes past trajectories of mobile stations in particular by employing NLP to build high dimensional vectors 103 (e.g. using word embeddings) from a sequence of APs that a mobile station goes through, when it moves. The high dimensional vectors 103 are then used to train the neural network 101 in the supervised learning phase.

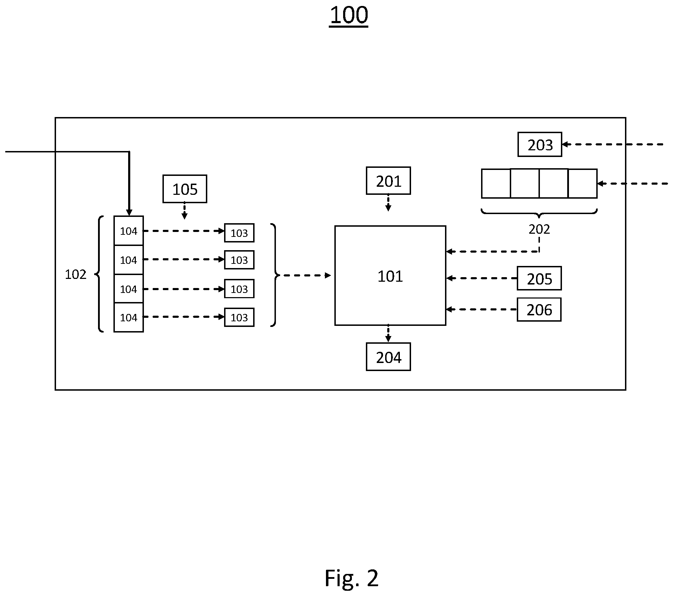

FIG. 2 shows a schematic view of a network device 100 according to an embodiment of the present disclosure in more detail. The device 100 shown in FIG. 2 comprises all features and functionality of the device 100 of FIG. 1, as well as the following optional features:
As it is illustrated in FIG. 2, the neural network 101 optionally can be pre-trained based on a labeled sequence of signal strength indicator measurements 201. That is, the neural network not only is trained based on the high dimensional AP vector 103, but also based on the labeled sequence of signal strength indicator measurements 201. The signal strength indicator measurements 201 indicate a signal strength between an AP and a mobile station (e.g. an RSSI). That is, the strength indicator measurements 201 can comprise information about HO events between mobile stations an APs (e.g. a moment in time when the signal strength between a mobile station and an AP is very low). The labels of the sequence of signal strength indicator measurements thus can be built based on the HO moments of a mobile station and an AP. In particular, the period before a HO can be used as a label. This e.g. implies that the ideal handoff moment is within in a certain timespan before the real HO event.

Optionally, the network device 100 can be configured to obtain a sequence of signal strength identifiers 202, and in the supervised learning phase of the neural network 101, learn to predict labels of the obtained sequence of signal strength indicators 202 by training the neural network 101 based on known labels of the obtained sequence of signal strength indicators 202.

Similar to the above case, the sequence of signal strength indicators 202 may indicate a signal strength between an AP and a mobile station (e.g. an RSSI). That is, the sequence of signal strength identifiers 202 can comprise information about HO events between mobile stations an APs (e.g. a moment in time when the signal strength between a mobile station and an AP is very low). Again, the to be predicted labels and the known labels of the obtained sequence of signal strength indicators 202 may correspond to HO moments of a mobile station and an AP. In particular, the period before a HO can be used as a label.

In other words, the network device 100 optionally can be configured to, in the supervised learning phase of the neural network 101, build the known labels based on handoff events or handover events of mobile stations.

Thus, the network device 100 can use two types of inputs for training the neural network. In particular, classic network metrics such as radio signal strength (RSSI) can be used together with a mobile station trajectory (that is, a sequence of AP identifiers 102 e.g. encoded with an NLP technique 105 or word embeddings).

As it is further illustrated in FIG. 2, optionally at least one high dimensional AP vector 203 is pre-stored in the network device 100. Further optionally, the network device 100 may receive at least one high dimensional AP vector 203. Thus, the network device 100 does not exclusively need to rely on those high dimensional AP vectors 103 which it created for each AP identifier 104 in the received sequence of AP identifiers 102. The network device 100 can also use high dimensional AP vectors 203 which are created by an external entity and provided to the network device 100. The network device 100 can further use high dimensional AP vectors 203 which are pre-stored in the network device 100 (no matter if they were created by the network device 100 itself, or by another entity).

Further optionally, the NLP technique 105 can comprise a word embedding technique. Generating the high dimensional AP vector 103 for each AP identifier 104 using a word embedding technique extracts and/or takes into account rich information on network topology and STA behavior from the AP identifiers 104. The word embedding technique in particular can be word2vec.

As shown in FIG. 2, the network device 100 optionally can use the neural network 101 to determine mobile station movement information 204. This is done based on signal strength information 205 and one or more AP identifiers 206. That is, for a given signal strength information 205 and an AP identifier 206 of a mobile station, the network device 100 can predict movement of the mobile station. In particular, the signal strength information 205 and the AP identifier 206 relate to the AP to which the mobile station is presently assigned. To this end, the network device 100 can request the signal strength information 205 and the AP identifier 206 from an external entity, or acquire the signal strength information 205 and the AP identifier 206 itself.

The mobile station movement information 204 may comprise a handoff indicator and/or a network scan indicator, to indicate an optimal time for performing a handoff or a network scan, depending on the predicted movement of a mobile station. The network device 100 may also instruct a mobile station and/or an AP to perform a handoff procedure based on the handoff indicator, and/or a network scan based on the network scan indicator. The handoff indicator can indicate a point in time of a mobile station disconnection from a wireless network or an AP. The network scan indicator can indicate a point in time for performing a network scan by a mobile station or an AP.

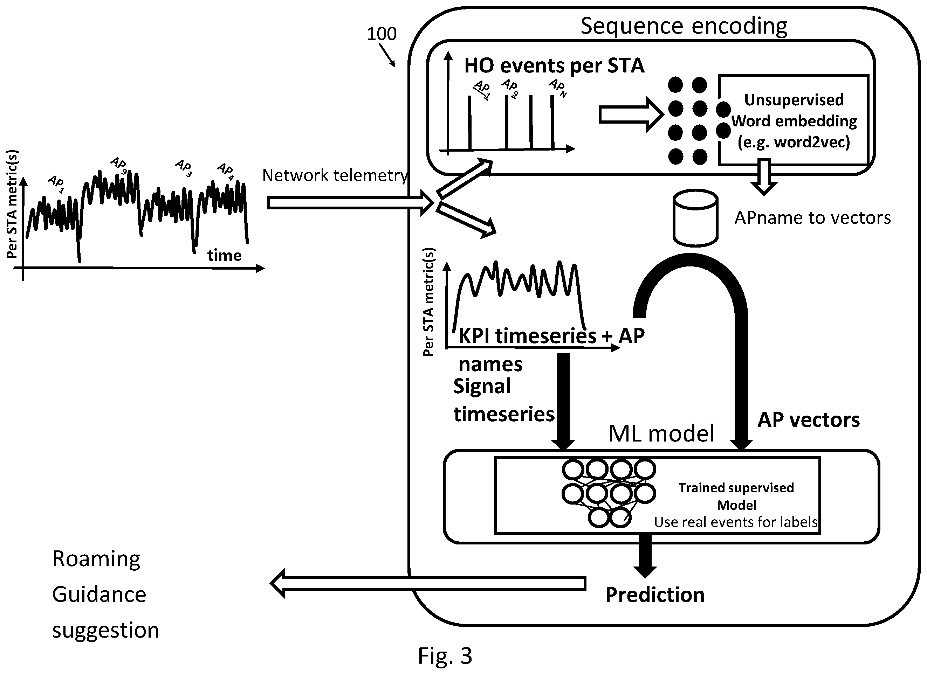

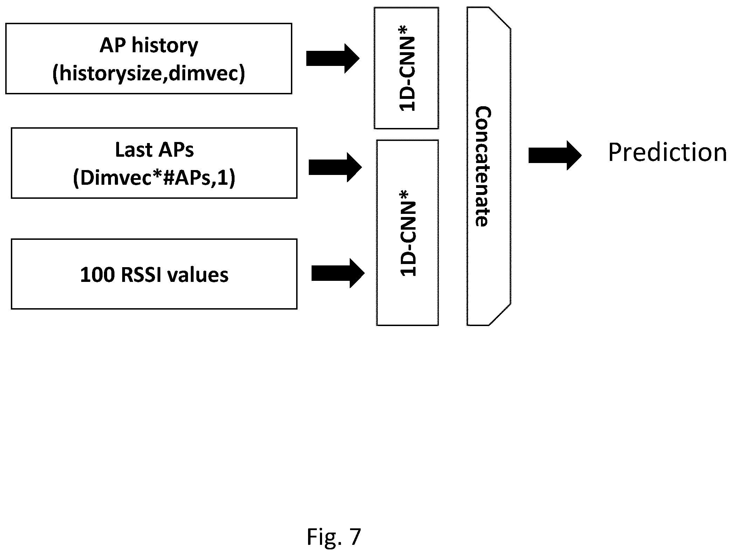

As it is in particular going to be described in view of FIG. 3 to FIG. 7, an NLP technique 105 (in particular, a word embedding technique) is very efficient to derive rich word vector representations (e.g. the high dimensional AP vector 103). Using the NLP technique 105, each word in a sequence (e.g. the sequence of AP identifiers 102) can be transformed into a high dimensional vector that carries information about semantics of the word. In this resulting high dimensional space, words that have similar meaning fall closely together. In the high dimensional space, the words are nicely arranged from a semantical perspective. For example, if the same translation from the word "king" to the word "queen" is applied to the word "man", the result is the word "woman".

Word embeddings (e.g. the high dimensional AP vector 103) can be easily obtained in an unsupervised way (i.e. without the need to generate labels). One way to build word embeddings for instance is to train a neural network 101 to predict the next word, given a set of previous or surrounding words (this information is available by construction in any natural language, which is a sequence of ordered words or strings). Training word embeddings is unsupervised in that it does not need labels. A simple neural network (e.g. with one hidden layer) can be used for predicting a word from its context. Then, only the weights of a layer need to be used to embed a word in a high dimensional space.

An aspect of the present disclosure is to leverage a past trajectory of a mobile station (e.g. the sequence of AP identifiers 102) in addition to classical radio or network metrics (e.g. the sequence of signal strength identifiers 202) to predict the motion status of a mobile station. In particular, one way of using the trajectory information is to see the AP names (which the mobile station followed) as words in a language (a past trajectory is considered as a sentence with many words). Then, unsupervised NLP techniques (such as word2vec) can be used to project AP names or MAC addresses (e.g. the AP identifier 104) in a high dimensional space (e.g. the high dimensional AP vector 103) where relationships between APs are encoded (similarly to how relationships between words are kept in this space). By using the high dimensional word vectors (instead of the AP names or their MAC addresses), complex past trajectories can be taken into account and the prediction of roaming events can be facilitated.

FIG. 3 shows several steps that can be performed by the network device 100. As illustrated, network telemetry information is input to the network device 100, from which two types of inputs can be extracted:
- HO events per mobile station (sequences of AP names that mobile stations follow when moving, e.g. the sequence of AP identifiers 102)
- Network metrics (radio signal strength, e.g. signal strength indicator measurements 201 or a sequence of signal strength indicators 202)

The HO events can be used as words in sentences to train a word2vec NLP model and extract a vector representation (e.g. the high dimensional AP vector 103) for each AP name (e.g. the AP identifier 104). This may result in a database that associates each AP name to a vector.

Both inputs, the AP names (e.g. a past AP trajectory) and network metrics (e.g. a key performance indicator (KPI) time series, that is, a RSSI series) can be fed to a trained ML model (e.g. the neural network 101). Before entering the learning module as input, AP names can be transformed into their counterpart AP vectors (e.g. the high dimensional AP vector 103). The ML model uses this input to predict the mobile stations motion status (e.g. a movement prediction or roaming guidance). The network device 100 can use any labelling technique for training the ML model. Alternatively, the actual roaming events observed in the past can be used "as a proxy" to obtain motion status labels (e.g. if the mobile station changes from one AP to the other, these moments can be labelled as "HO soon").

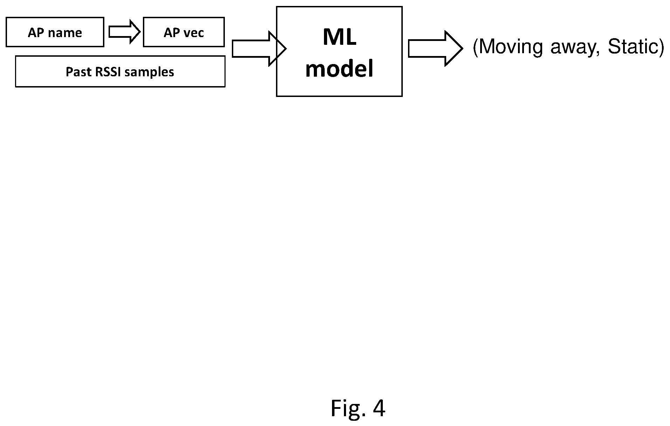

As it is illustrated in FIG. 4 the ML model (e.g. the neural network 101) may takes as input:
- past RSSI samples, for example 100 last values (that is, a sequence of signal strength indicators);
- current (or last) AP name(s) to which the STA is (was) associated, which is transformed to the AP vector format as described above.

The ML model may be trained to detect a motion status (which can be one of these two classes) as follows:
- Class 0: mobile station is moving away in the next N seconds, N being a parameter that can be adjusted;
- Class 1: a mobile station is static;

Both input data (AP vector embedding + last RSSI samples) can be combined as one vector and fed to a ML model (e.g. the neural network 101), which can be a convolutional neural network.

The embedding method can e.g. be glove, word2vec or any other NLP word embedding technique 105 (including frequency based methods).

The network device 100 first may run for a predefined amount of time without making predictions or roaming guidance. It may first learn the word embeddings of the AP names. Once the embeddings are learned, the network device 100 can enter a second phase which is providing predictions using the trained ML model.

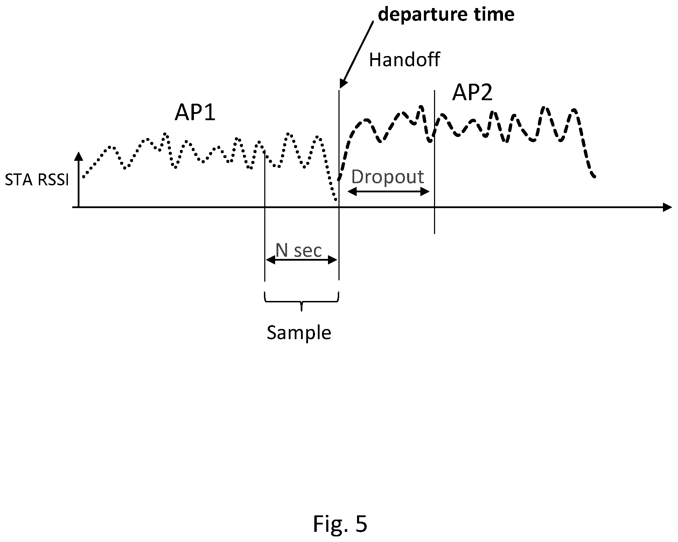

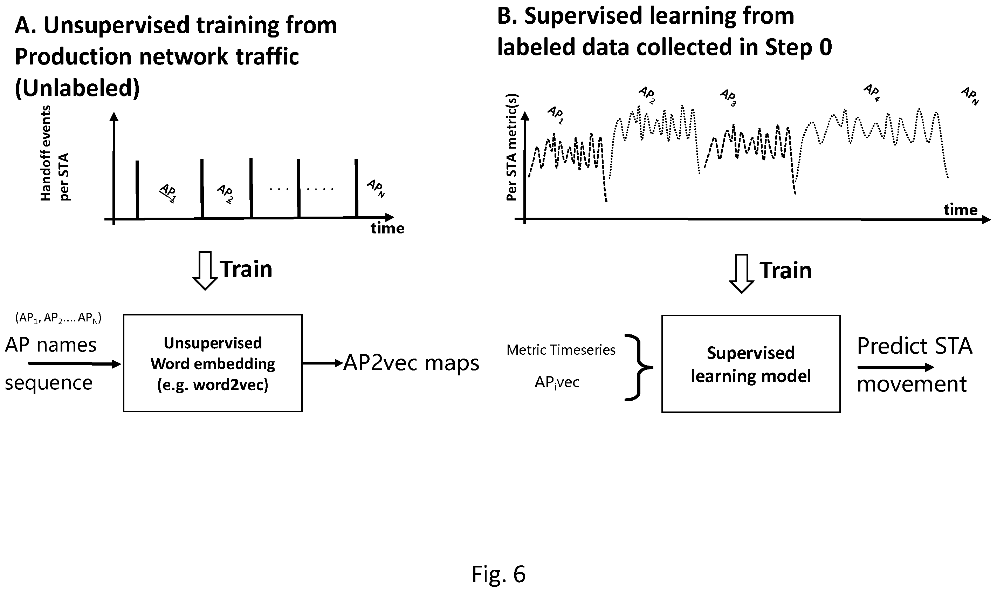

As it is now described in view of FIG. 5 and FIG. 6, the ML model can be trained using labeled data constructed from real network events, instead of human labels. Instead of using a human heuristics to label the data (into different classes), real departure moments (e.g. HO moments) can be observed from historical RSSI data and used as objective events to label the data. As shown in FIG. 5, all the "N sec samples" before the departure time can be labelled as "HO in the next N seconds" samples. This solves a labelling problem and avoids the use of fastidious labeling methods. Once the labels are built, the ML model can be trained as outlined above. That is, the ML model may take AP embeddings and RSSI signals as an input and outputs the labels built as described above.

The scenario shown in FIG. 5 can be regarded as a classification problem with two classes:
- Moving away, i.e. departure (HO) in less than N seconds
- Stable, i.e. no departure (HO) in the coming N seconds

Departure can be defined as leaving the network (e.g. for some time) or as moving to another AP. It also may occur that STAs dropout before HO to new AP. Departure may be regarded as a proxy for a "STA move away status". N may be regarded as a prediction window. That is, the "sample" shown in FIG. 5 may be labelled as: "departure in less than N seconds".

FIG. 6 further illustrates unsupervised training based on production network traffic (which comprises the sequence of AP identifiers 102) to learn the high dimensional AP vectors 103 based on AP identifiers 104 (i.e. AP names) in the sequence of AP identifiers 102. FIG. 6 also illustrates supervised training of the ML model (e.g. the neural network 101) based on labelled data (e.g. an RSSI time series).

Optionally, the network device 100 can also be trained to detect other motion states such as: (i) if a mobile station is leaving the network entirely; (ii) if a mobile station is moving to another stable position (e.g. meeting room); or (ii) if a mobile station is continuously moving inside the building.

The labeled data for such training can be obtained from offline past data. Hence the input and output for learning would be:
- Input: STA metrics (e.g. last 100 samples) + AP2vecs
- Output: 1: leave the network; 2: go to a stable AP; 3: continuously move in the network

This is particularly useful to solve the "sticky terminal" problem: A terminal (that is, a mobile station) remains attached to a network although it is far from the network and needs to roam, e.g. to 5G.

As it is illustrated in FIG: 7, a long term history and a short term history of APs can be used to train the ML model (e.g. ID-CNN*). A long term history can be a past trajectory in terms of APs (e.g. to capture long term movement habits). A short term history e.g. is a list of APs in last minute (e.g. 0, 5, 10, 15, 20, ... 55 seconds before). The short term history can capture short term stability/instability of a mobile station. A combined short term and long term history can be used as an input to the ML model. These inputs can be processed by the same ML model or processed by different ML models first, before the result is concatenated.

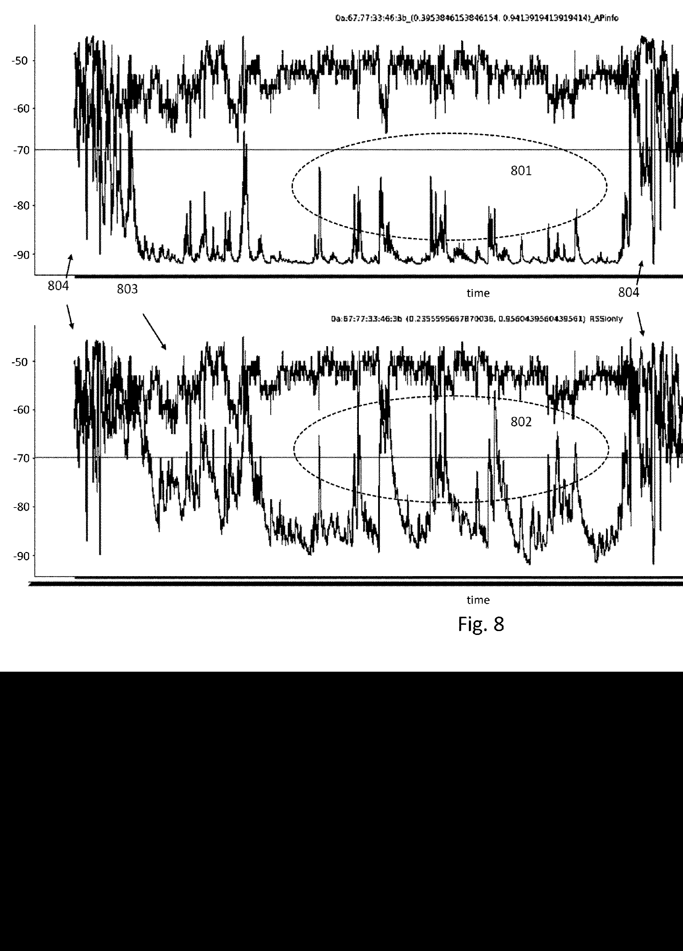

As it is now going to be described in view of FIG. 8 to FIG. 10 and again in other words, the network device 100 may use radio telemetry data as an input, in particular a combination of signal information (e.g. RSSI) and categorical information (which e.g. represents the AP radio interface to which a mobile station is associated). The network device 100 may output a roaming guidance (such as recommended scan times) allowing for targeted channel scans instead of scanning the network all the time. Specifically, historical data can be used to calibrate a neural network in a learning phase, while the calibrated network is applied to real-time data in an inference phase.

In the network device 100, categorical AP information can be used in addition to classic network metrics, such as an RSSI time series. Furthermore, this AP information can be transformed into AP embeddings using word a embedding technique from NLP, allowing to extract and take into account rich information on network topology and mobile station behavior. Accordingly, during the supervised learning phase, the AP embeddings are combined with RSSI information as an input to a neural network. A groundtruth of ideal scanning moments that is necessary for learning can be generated in a purely data-driven fashion, e.g. using real HO events in historical data to derive the ideal scanning moments. The samples when a network scan should occur can be labelled as "HO soon", the other ones as "static". In particular, the time periods before a mobile station triggered HO are considered to be the ideal scan moments.

Using AP embeddings measurably reduces the number of false positive HO suggestions, i.e. the precision of the movement detection increases. This is indicated in FIG. 8. It shows HO moment detection both for a conventional mechanism (see section 802) and for the network device 100 (see section 801). The RSSI time series 803 of a STA, together with the overlays 804 that indicate the "HO soon" samples in the ground truth are identical in both cases. The predictions of HO moments (probabilities from 0 to 1) are in particular shown in sections 801 and 802. When the lines go above the horizontal line (at 0.5 on the right y-axis = P>0.5 to move away), the algorithm detects a HO moment. The moments overlaid by the circles show that the conventional algorithm detects more "HO soon" samples that are "static" than the network device 100.

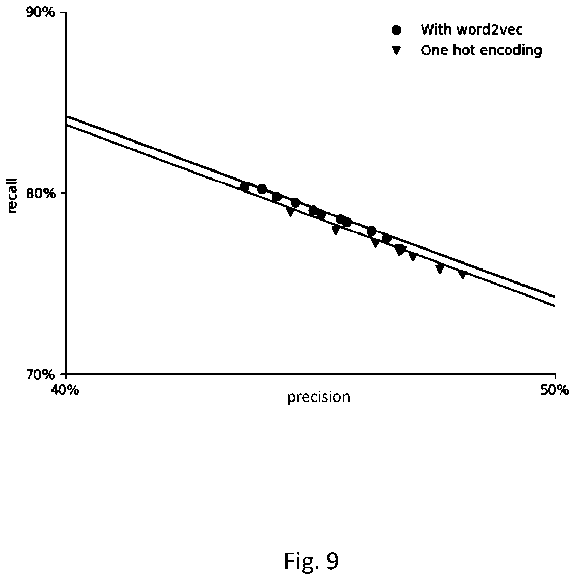

The network device 100 also improves results with regard to precision and recall. FIG. 9 compares results of the network device 100 with a mechanism that uses categorical AP information with "naive" one-hot encoding, that is, without relying on the NLP technique 105. Each of the two mechanisms is passed through 10 learning phases on the same historical data set to account for the randomness in the learning. Afterwards, both solutions are tested on the same dataset from the same network. The results are represented on the two dimensions precision and recall, each referring to the "HO soon" class. FIG. 9 shows that a network device 100 using AP embeddings based on an NLP technique 105 is consistently better with respect to precision and recall compared to a system without the NLP technique 105.

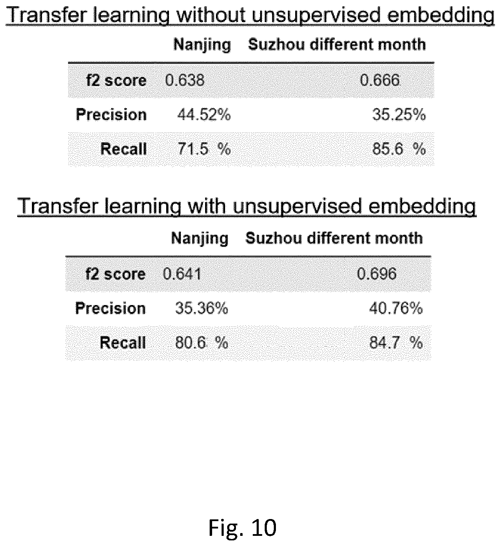

The network device 100 also improves the transferability of the mechanism, reducing the necessity for a time and energy intensive learning phase. The table shown in FIG. 10 compares the network device 100 (below) with a mechanism with AP information but without NLP based AP embedding (above). The two mechanisms are trained on the same dataset, but then tested on datasets from different WLANs. The F2 score is a combination of precision and recall, in this case of the "HO soon" class. It can be seen that the F2 score is higher, i.e. better, for the network device 100 on both test networks.

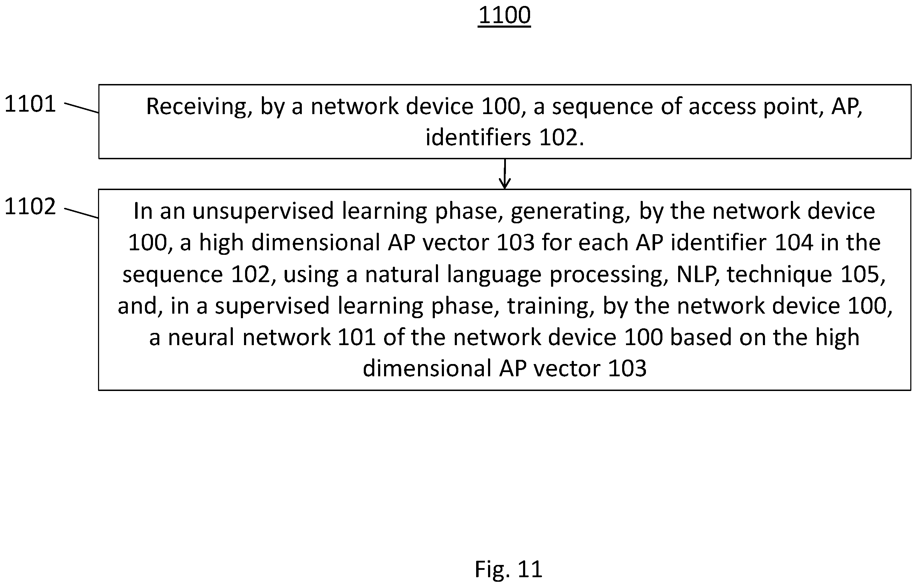

FIG. 11 shows a schematic view of a method 1100 according to an embodiment of the present disclosure. The method 1100 is for training of mobile station movement prediction.

The method 1100 comprises a step of receiving 1101, by a network device 100, a sequence of access point, AP, identifiers 102. The method comprises another step of, in an unsupervised learning phase, generating 1102, by the network device 100, a high dimensional AP vector 103 for each AP identifier 104 in the sequence 102, using a natural language processing, NLP, technique 105, and, in a supervised learning phase, training, by the network device 100, a neural network 101 of the network device 100 based on the high dimensional AP vector 103.

The present disclosure has been described in conjunction with various embodiments as examples as well as implementations. However, other variations can be understood and effected by those persons skilled in the art and practicing the claimed disclosure, from the studies of the drawings, this disclosure, and the independent claims. In the claims as well as in the description, the word "comprising" does not exclude other elements or steps and the indefinite article "a" or "an" does not exclude a plurality. A single element or other unit may fulfill the functions of several entities or items recited in the claims. The mere fact that certain measures are recited in the mutual different dependent claims does not indicate that a combination of these measures cannot be used in an advantageous implementation.

## Claims

1. A network device (100) for training of mobile station movement prediction,
wherein the network device (100) comprises a neural network (101), and
wherein the network device (100) is configured to:
- receive a sequence of access point, AP, identifiers (102);
- in an unsupervised learning phase, generate a high dimensional AP vector (103) for each AP identifier (104) in the sequence (102), using a natural language processing, NLP, technique (105), and, in a supervised learning phase, train the neural network (101) based on the high dimensional AP vector (103);
- obtain a sequence of signal strength identifiers (202);
- in the supervised learning phase of the neural network (101), learn to predict labels of the obtained sequence of signal strength indicators (202) by training the neural network (101) based on known labels of the obtained sequence of signal strength indicators (202); and
- in the supervised learning phase of the neural network (101), build the known labels based on handoff events or handover events of mobile stations.

2. The network device (100) according to claim 1, wherein the sequence of AP identifiers (102) comprises a sequence of access points, APs, to which a mobile station was connected.

3. The network device (100) according to claim 1 or 2, wherein the neural network (101) is pre-trained based on a labeled sequence of signal strength indicator measurements (201).

4. The network device (100) according to any one of the preceding claims, wherein at least one high dimensional AP vector (203) is pre-stored in the network device (100), or wherein the network device (100) is configured to receive at least one high dimensional AP vector (203).

5. The network device (100) according to any one of the preceding claims, wherein the NLP technique (105) comprises a word embedding technique.

6. The network device (100) according to claim 5, wherein the word embedding technique comprises word2vec.

7. The network device (100) according to any one of the preceding claims, further configured to, in an inference phase, invoke the neural network (101) to determine mobile station movement information (204) based on signal strength information (205) and one or more AP identifiers (206).

8. The network device (100) according to claim 7, wherein the mobile station movement information (204) comprises a handoff indicator and/or a network scan indicator.

9. The network device (100) according to claim 8, further configured to instruct a mobile station to perform a handoff procedure based on the handoff indicator, and/or a network scan based on the network scan indicator.

10. The network device (100) according to claim 8 or 9, wherein the handoff indicator indicates a point in time of a mobile station disconnection from a wireless network, and/or wherein the network scan indicator indicates a point in time for performing a network scan by selected set of APs.

11. A method (1100) for training mobile station movement prediction, wherein the method comprises the steps of:
- receiving (1101), by a network device (100), a sequence of access point, AP, identifiers (102);
- in an unsupervised learning phase, generating (1102), by the network device (100), a high dimensional AP vector (103) for each AP identifier (104) in the sequence (102), using a natural language processing, NLP, technique (105), and, in a supervised learning phase, training, by the network device (100), a neural network (101) of the network device (100) based on the high dimensional AP vector (103);
- obtaining, by the network device, a sequence of signal strength identifiers, and in the supervised learning phase of the neural network, learning, by the network device, to predict labels of the obtained sequence of signal strength indicators by training the neural network based on known labels of the obtained sequence of signal strength indicators; and
- in the supervised learning phase of the neural network, building, by the network device, the known labels based on handoff events or handover events of mobile stations.

12. A computer program product comprising instructions which, when the program is executed by a computer, cause the computer to carry out the steps of the method (1100) of claim 11.

13. A non-transitory computer-readable storage medium comprising instructions which, when executed by a computer, cause the computer to carry out the steps of the method (1100) of claim 11.

## Patentansprüche

1. Netzwerkvorrichtung (100) zum Trainieren der Vorhersage von Bewegung einer Mobilstation,
wobei die Netzwerkvorrichtung (100) ein neuronales Netzwerk (101) umfasst und wobei die Netzwerkvorrichtung (100) zu Folgendem ausgelegt ist:
- Empfangen einer Sequenz von Zugangspunktkennungen, AP-Kennungen, (102);
- in einer unüberwachten Lernphase, Erzeugen eines hochdimensionalen AP-Vektors (103) für jede AP-Kennung (104) in der Sequenz (102) unter Verwendung einer Technik (105) zur Verarbeitung natürlicher Sprache, NLP-Technik, und in einer überwachten Lernphase, Trainieren des neuronalen Netzwerks (101) basierend auf dem hochdimensionalen AP-Vektor (103);
- Erhalten einer Sequenz von Signalstärkekennungen (202);
- in der überwachten Lernphase des neuronalen Netzwerks (101), Lernen, Kennzeichnungen der erhaltenen Sequenz von Signalstärkeindikatoren (202) durch Trainieren des neuronalen Netzwerks (101) basierend auf bekannten Kennzeichnungen der erhaltenen Sequenz von Signalstärkeindikatoren (202) vorherzusagen; und
- in der überwachten Lernphase des neuronalen Netzwerks (101), Erstellen der bekannten Kennzeichnungen basierend auf Weiterreichereignissen oder Übergabeereignissen von Mobilstationen.

2. Netzwerkvorrichtung (100) nach Anspruch 1, wobei die Sequenz von AP-Kennungen (102) eine Sequenz von Zugangspunkten, APs, umfasst, mit denen eine Mobilstation verbunden wurde.

3. Netzwerkvorrichtung (100) nach Anspruch 1 oder 2, wobei das neuronale Netzwerk (101) basierend auf einer gekennzeichneten Sequenz von Signalstärkeindikatormessungen (201) vortrainiert ist.

4. Netzwerkvorrichtung (100) nach einem der vorhergehenden Ansprüche, wobei mindestens ein hochdimensionaler AP-Vektor (203) vorab in der Netzwerkvorrichtung (100) gespeichert ist, oder wobei die Netzwerkvorrichtung (100) dazu ausgelegt ist, mindestens einen hochdimensionalen AP-Vektor (203) zu empfangen.

5. Netzwerkvorrichtung (100) nach einem der vorhergehenden Ansprüche, wobei die NLP-Technik (105) eine Worteinbettungstechnik umfasst.

6. Netzwerkvorrichtung (100) nach Anspruch 5, wobei die Worteinbettungstechnik word2vec umfasst.

7. Netzwerkvorrichtung (100) nach einem der vorhergehenden Ansprüche, ferner dazu ausgelegt, in einer Inferenzphase, das neuronale Netzwerk (101) aufzurufen, um Mobilstationsbewegungsinformationen (204) basierend auf Signalstärkeinformationen (205) und einer oder mehreren AP-Kennungen (206) zu bestimmen.

8. Netzwerkvorrichtung (100) nach Anspruch 7, wobei die Mobilstationsbewegungsinformationen (204) einen Weiterreichindikator und/oder einen Netzwerk-Scan-Indikator umfassen.

9. Netzwerkvorrichtung (100) nach Anspruch 8, ferner dazu ausgelegt, eine Mobilstation anzuweisen, basierend auf dem Weiterreichindikator, einen Weiterreichvorgang und/oder basierend auf dem Netzwerk-Scan-Indikator, einen Netzwerk-Scan durchzuführen.

10. Netzwerkvorrichtung (100) nach Anspruch 8 oder 9, wobei der Weiterreichindikator einen Zeitpunkt einer Trennung einer Mobilstation von einem drahtlosen Netzwerk anzeigt und/oder wobei der Netzwerk-Scan-Indikator einen Zeitpunkt zum Durchführen eines Netzwerk-Scans durch einen ausgewählten Satz von APs anzeigt.

11. Verfahren (1100) zum Trainieren der Vorhersage von Bewegung einer Mobilstation, wobei das Verfahren die folgenden Schritte umfasst:
- Empfangen (1101) einer Sequenz von Zugangspunktkennungen, AP-Kennungen, (102) durch eine Netzwerkvorrichtung (100);
- in einer unüberwachten Lernphase, Erzeugen (1102) eines hochdimensionalen AP-Vektors (103) für jede AP-Kennung (104) in der Sequenz (102) durch die Netzwerkvorrichtung (100) unter Verwendung einer Technik (105) zur Verarbeitung natürlicher Sprache, NLP-Technik, und in einer überwachten Lernphase, Trainieren eines neuronalen Netzwerks (101) der Netzwerkvorrichtung (100) durch die Netzwerkvorrichtung (100) basierend auf dem hochdimensionalen AP-Vektor (103);
- Erhalten einer Sequenz von Signalstärkekennungen durch die Netzwerkvorrichtung und in der überwachten Lernphase des neuronalen Netzwerks, Lernen durch die Netzwerkvorrichtung, Kennzeichnungen der erhaltenen Sequenz von Signalstärkeindikatoren durch Trainieren des neuronalen Netzwerks basierend auf bekannten Kennzeichnungen der erhaltenen Sequenz von Signalstärkeindikatoren vorherzusagen; und
- in der überwachten Lernphase des neuronalen Netzwerks, Erstellen der bekannten Kennzeichnungen durch die Netzwerkvorrichtung basierend auf Weiterreichereignissen oder Übergabeereignissen von Mobilstationen.

12. Computerprogrammprodukt, umfassend Anweisungen, die bei Ausführung des Programms durch einen Computer, den Computer zum Ausführen der Schritte des Verfahrens (1100) nach Anspruch 11 veranlassen.

13. Nichtflüchtiges, computerlesbares Speichermedium, umfassend Anweisungen, die bei Ausführung durch einen Computer, den Computer zum Ausführen der Schritte des Verfahrens (1100) nach Anspruch 11 veranlassen.

## Revendications

1. Dispositif de réseau (100) permettant de former une prédiction de déplacement de station mobile, le dispositif de réseau (100) comprenant un réseau neuronal (101), et le dispositif de réseau (100) étant configuré pour :
recevoir une séquence d'identifiants de points d'accès (AP) (102) ;
au cours d'une phase d'apprentissage non supervisé, générer un vecteur AP à haute dimension (103) pour chaque identifiant AP (104) de la séquence (102), au moyen d'une technique de traitement du langage naturel (NLP) (105), et, au cours d'une phase d'apprentissage supervisé, former le réseau neuronal (101) sur la base du vecteur AP à haute dimension (103) ;
obtenir une séquence d'identifiants d'intensités de signal (202) ;
au cours de la phase d'apprentissage supervisé du réseau neuronal (101), apprendre à prédire des étiquettes de la séquence obtenue d'indicateurs d'intensités de signal (202) en formant le réseau neuronal (101) sur la base d'étiquettes connues de la séquence obtenue d'indicateurs d'intensités de signal (202) ; et
au cours de la phase d'apprentissage supervisé du réseau neuronal (101), construire les étiquettes connues sur la base d'événements de relais ou d'événements de transfert de stations mobiles.

2. Dispositif de réseau (100) selon la revendication 1, la séquence d'identifiants AP (102) comprenant une séquence de points d'accès (AP) auxquels une station mobile a été connectée.

3. Dispositif de réseau (100) selon la revendication 1 ou 2, le réseau neuronal (101) étant pré-formé sur la base d'une séquence étiquetée de mesures d'indicateurs d'intensités de signal (201).

4. Dispositif de réseau (100) selon l'une quelconque des revendications précédentes, au moins un vecteur AP à haute dimension (203) étant pré-stocké dans le dispositif de réseau (100), ou le dispositif de réseau (100) étant configuré pour recevoir au moins un vecteur AP à haute dimension (203).

5. Dispositif de réseau (100) selon l'une quelconque des revendications précédentes, la technique NLP (105) comprenant une technique d'intégration de mots.

6. Dispositif de réseau (100) selon la revendication 5, la technique d'intégration de mots comprenant word2vec.

7. Dispositif de réseau (100) selon l'une quelconque des revendications précédentes, configuré en outre, au cours d'une phase d'inférence, pour invoquer le réseau neuronal (101) afin de déterminer des informations de déplacement de station mobile (204) sur la base d'informations d'intensité de signal (205) et d'un ou plusieurs identifiants AP (206).

8. Dispositif de réseau (100) selon la revendication 7, les informations de déplacement de station mobile (204) comprenant un indicateur de relais et/ou un indicateur de balayage de réseau.

9. Dispositif de réseau (100) selon la revendication 8, configuré en outre pour donner l'instruction à une station mobile de réaliser une procédure de relais sur la base de l'indicateur de relais et/ou un balayage de réseau sur la base de l'indicateur de balayage de réseau.

10. Dispositif de réseau (100) selon la revendication 8 ou 9, l'indicateur de relais indiquant un moment où une station mobile se déconnecte d'un réseau sans fil, et/ou l'indicateur de balayage de réseau indiquant un moment pour réaliser un balayage de réseau par un ensemble sélectionné d'AP.

11. Procédé (1100) permettant de former une prédiction de déplacement de station mobile, le procédé comprenant les étapes consistant à :
recevoir (1101), par un dispositif de réseau (100), une séquence d'identifiants de points d'accès (AP) (102) ;
au cours d'une phase d'apprentissage non supervisé, générer (1102), par le dispositif de réseau (100), un vecteur AP à haute dimension (103) pour chaque identifiant AP (104) de la séquence (102), au moyen d'une technique de traitement du langage naturel (NLP) (105), et, au cours d'une phase d'apprentissage supervisé, former, par le dispositif de réseau (100), un réseau neuronal (101) du dispositif de réseau (100) sur la base du vecteur AP à haute dimension (103) ;
obtenir, par le dispositif de réseau, une séquence d'identifiants d'intensités de signal, et, au cours de la phase d'apprentissage supervisé du réseau neuronal, apprendre, par le dispositif de réseau, à prédire des étiquettes de la séquence obtenue d'indicateurs d'intensités de signal en formant le réseau neuronal sur la base d'étiquettes connues de la séquence obtenue d'indicateurs d'intensités de signal ; et
au cours de la phase d'apprentissage supervisé du réseau neuronal, construire, par le dispositif de réseau, les étiquettes connues sur la base d'événements de relais ou d'événements de transfert de stations mobiles.

12. Produit-programme informatique comprenant des instructions qui, lorsque le programme est exécuté par un ordinateur, amènent l'ordinateur à mettre en œuvre les étapes du procédé (1100) selon la revendication 11.

13. Support de stockage non transitoire lisible par ordinateur, comprenant des instructions qui, lorsqu'elles sont exécutées par un ordinateur, amènent l'ordinateur à mettre en œuvre les étapes du procédé (1100) selon la revendication 11.
